# DEMANDE DE BREVET EUROPEEN

(11) **EP 1 043 488 A1**
(43) Date de publication de la demande: **11.10.2000**
(21) Numéro de dépôt: 00400892.6
(22) Date de dépôt: 31.03.2000
(51) Int. Cl.: F02D 19/06

(54) **Procédé de gestion de l'alimentation en carburant d'un moteur à injection à carburation mixte, et dispositif de mise en oeuvre de ce procédé**

(30) Priorité: 07.04.1999 FR 9904324
(71) Demandeur: Renault, 92109 Boulogne Billancourt (FR)
(72) Inventeur: Simon, Benoît, 91240 St-Michel S/Orge (FR)

(57) **Abrégé**

Dans ce procédé, on utilise une même rampe de distribution (1) pour alimenter le moteur (3) avec un premier carburant sous basse pression tel que de l'essence et avec un deuxième carburant tel que du G.P.L. Lors d'une phase de transition d'une carburation de type haute pression vers une carburation de type basse pression, on élève la pression du premier carburant, de manière que la pression du deuxième carburant qui se trouve mélangé au premier carburant dans la rampe (1) pendant la phase de transition reste suffisamment élevée pour éviter la vaporisation de ce deuxième carburant.

Application au domaine de l'automobile.

## Description

La présente invention est relative à un procédé de gestion de l'alimentation en carburant d'un moteur à injection à carburation mixte, tel qu'un moteur de véhicule automobile à essence et G.P.L., ainsi qu'à un dispositif de mise en oeuvre de ce procédé.

Les moteurs à injection à carburation mixte, tels que les moteurs à essence et G.P.L. (Gaz de Pétrole Liquéfié) pour véhicules automobiles, constituent une solution prometteuse aux problèmes de pollution rencontrés notamment en milieu urbain.

Dans un véhicule automobile, le G.P.L. est stocké sous pression sous forme liquide dans un réservoir, et il a tendance à se vaporiser lorsqu'il sort de ce réservoir.

Or, pour pouvoir contrôler parfaitement la quantité de G.P.L. injectée dans le moteur, notamment dans le but de satisfaire aux normes de pollution, il est impératif de le maintenir à l'état liquide.

Pour cela, on utilise classiquement une pompe de surpression située entre le réservoir de G.P.L. et le moteur, permettant d'atteindre typiquement des pressions de l'ordre de 20 bars.

Ces pressions étant nettement supérieures à celles qui sont nécessaires pour alimenter le moteur en essence, il est nécessaire de prévoir deux circuit d'alimentation distincts pour surmonter les problèmes susceptibles de survenir lors d'une transition d'un mode de carburation à un autre.

Ainsi, classiquement, un moteur à injection à carburation mixte comporte deux rampes de distribution et deux séries d'injecteurs distincts, d'où il résulte une complexité, un coût, et un encombrement assez prohibitifs.

La présente invention a pour but principal de fournir un procédé de gestion de l'alimentation en carburant d'un moteur à carburation mixte permettant de s'affranchir de ces inconvénients.

On atteint ce but de l'invention, ainsi que d'autres qui apparaîtront à la lecture de ce qui va suivre, avec un procédé de gestion de l'alimentation en carburant d'un moteur à injection à carburation mixte pouvant être alimenté sélectivement, selon un premier mode de carburation, avec un premier carburant tel que de l'essence dans une plage de pressions basses ou, selon un deuxième mode de carburation, avec un deuxième carburant tel que du G.P.L. dans une plage de pressions hautes, ledit deuxième carburant étant susceptible de se vaporiser dans ladite plage de pressions basses, remarquable en ce qu'on utilise une même rampe de distribution pour alimenter ledit moteur avec l'un ou l'autre de ces deux carburants, et en ce que, lors d'une phase de transition dudit deuxième mode de carburation vers ledit premier mode de carburation, on alimente ladite rampe avec du premier carburant sous une pression située dans ladite plage de pressions hautes, de manière que la pression du deuxième carburant qui se trouve mélangé au premier carburant dans ladite rampe reste située dans ladite plage de pressions hautes, évitant ainsi la vaporisation de ce deuxième carburant.

Suivant d'autres caractéristiques de ce procédé:
- pendant le fonctionnement dudit moteur selon ledit premier mode de carburation, on remplit une chambre à volume variable avec du premier carburant, et lors de ladite phase de transition, on met en communication de fluide ladite chambre avec ladite rampe de distribution, et on comprime cette chambre sous une pression située dans ladite plage de pressions hautes, afin d'alimenter ladite rampe avec du premier carburant sous une pression située dans cette plage,
- on utilise la pression dudit deuxième carburant pour comprimer ladite chambre,
- on stocke ledit deuxième carburant ayant servi à comprimer ladite chambre après ladite phase de transition,
- on stocke le mélange des deux carburants qui n'a pas été consommé par ledit moteur pendant ladite phase de transition.

Grâce à ces caractéristiques, on peut n'utiliser qu'une seule rampe de distribution et qu'une seule série d'injecteurs pour alimenter sélectivement le moteur avec l'un ou l'autre des deux carburants, sans qu'il y ait de risque de vaporisation du carburant alimenté sous haute pression lors d'une transition d'un mode de carburation à un autre.

La présente invention a également pour but de fournir un dispositif permettant de mettre en oeuvre le procédé susmentionné.

On atteint ce but de l'invention avec un dispositif pour la mise en oeuvre d'un procédé conforme à ce qui précède, comprenant un premier circuit pour alimenter ledit moteur à injection avec ledit premier carburant dans ladite plage de pressions basses, un deuxième circuit pour alimenter ledit moteur avec ledit deuxième carburant dans ladite plage de pressions hautes, remarquable en ce qu'il comprend des premiers moyens de vanne pour mettre sélectivement en communication de fluide lesdits premier et deuxième circuits avec ladite rampe de distribution, et en ce qu'il comprend des moyens pour alimenter ladite rampe avec ledit premier carburant sous une pression située dans ladite plage de pressions hautes lors de ladite phase de transition.

Suivant d'autres caractéristiques de ce dispositif:
- ledit premier circuit comprend un réservoir de premier carburant et, interposés entre celui-ci et ladite rampe de distribution, une pompe basse pression et un clapet anti-retour, ledit deuxième circuit comprend un réservoir de deuxième carburant et, interposée entre celui-ci et ladite rampe de distribution, une pompe de surpression, lesdits premiers moyens de vanne sont interposés entre ledit clapet anti-retour, ladite pompe de surpression et ladite rampe de distribution, lesdits moyens d'alimentation de ladite rampe avec du premier carburant sous une pression située dans ladite plage de pressions hautes consistent en un caisson d'égalisation de pression comprenant des première et deuxième chambres séparées par un organe de séparation étanche et mobile, ladite première chambre étant en communication de fluide permanente avec la portion dudit premier circuit qui est comprise entre ledit clapet anti-retour et lesdits premiers moyens de vanne, et ce dispositif comprend des deuxièmes moyens de vanne permettant sélectivement d'isoler cette deuxième chambre, de la purger ou de la mettre en communication de fluide avec la portion dudit deuxième circuit qui est comprise entre ladite pompe de surpression et lesdits premiers moyens de vanne,
- ledit organe de séparation étanche et mobile est une membrane souple,
- ledit organe de séparation étanche et mobile est un piston,
- ce dispositif comprend des troisièmes moyens de vanne disposés à la sortie de ladite rampe de distribution, permettant sélectivement de faire recirculer ledit premier carburant dans ledit premier circuit ou ledit deuxième carburant dans ledit deuxième circuit, ou de stocker un mélange de ces deux carburants,
- ce dispositif comprend une cartouche à charbon actif pour stocker temporairement le carburant provenant de la purge de ladite deuxième chambre ou le mélange de carburants provenant de ladite rampe de distribution, avant de l'envoyer vers ledit moteur.

Grâce à ces caractéristiques, on obtient un dispositif d'alimentation en carburant d'un moteur à injection à carburation mixte qui est à la fois simple, peu coûteux, peu encombrant et peu polluant.

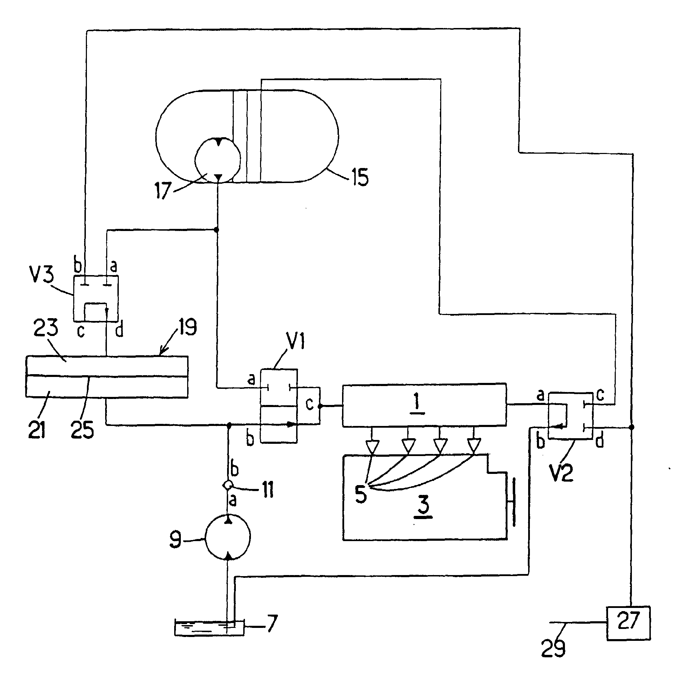

D'autres caractéristiques et avantages de la présente invention apparaîtront à la lumière de la description qui va suivre et à l'examen de l'unique figure du dessin annexé, représentant schématiquement le dispositif selon l'invention.

Comme on peut le voir sur cette figure, ce dispositif comprend une rampe de distribution 1 destinée à alimenter un moteur à injection 3 par l'intermédiaire d'une pluralité d'injecteurs 5.

Un premier circuit permet d'alimenter la rampe de distribution 1 avec un premier carburant tel que de l'essence dans une plage de pressions basses (situées typiquement autour de 5 bars).

Ce premier circuit comprend un réservoir 7 de premier carburant et, interposés entre celui-ci et la rampe de distribution 1, une pompe basse pression 9 et un clapet anti-retour 11. Ce dernier est passant dans le sens ab, et non passant dans le sens ba.

Un deuxième circuit permet d'alimenter la rampe de distribution 1 avec un deuxième carburant tel que du G.P.L. dans une plage de pressions hautes (situées typiquement autour de 20 bars).

Ce deuxième circuit comprend un réservoir 15 de deuxième carburant et, interposée entre celui-ci et la rampe de distribution 1, une pompe de surpression 17.

Une première électrovanne V1 placée à l'entrée de la rampe de distribution 1 permet de mettre sélectivement en communication de fluide le réservoir 7 (position bc) ou le réservoir 15 (position ac) avec cette rampe.

Selon une caractéristique essentielle, le dispositif selon l'invention comprend un caisson d'égalisation de pression 19 comprenant des première 21 et deuxième 23 chambres séparées l'une de l'autre par un organe de séparation étanche et mobile 25 tel qu'une membrane souple.

La première chambre 21 communique en permanence avec la portion du premier circuit qui est située entre le clapet anti-retour 11 et la première électrovanne V1.

Le dispositif selon l'invention comprend également un cartouche de filtrage à charbon actif 27, ou « canister » en anglais, dont la sortie 29 est reliée au moteur 3. On peut ainsi alimenter sélectivement ce moteur avec du carburant absorbé par le charbon actif dans la cartouche.

Une deuxième électrovanne V2 placée à la sortie de la rampe de distribution 1 permet de mettre celle-ci sélectivement en communication de fluide avec le réservoir 7 (position ab), avec le réservoir 15 (position ac), ou avec la cartouche à charbon actif 27 (position ad).

Une troisième électrovanne V3 permet sélectivement d'isoler la deuxième chambre 23 du caisson 19 (position cd), ou de la mettre en communication de fluide avec la portion du deuxième circuit qui est comprise entre la pompe de surpression 17 (position ad) et l'électrovanne V1, ou avec la cartouche à charbon actif 27 (position db).

Le principe de fonctionnement du dispositif selon l'invention est le suivant.

Dans un premier mode de carburation où le moteur 3 est alimenté avec le premier carburant, les électrovannes V1, V2, V3 sont respectivement en positions bc, ab et db.

Dans ces conditions, le premier carburant est prélevé par la pompe basse pression 9 dans le premier réservoir 7, puis envoyé via le clapet anti-retour 11 et la première électrovanne V1 jusque dans la rampe de distribution 1.

Le reliquat de premier carburant non consommé par le moteur 3 ressort de la rampe de distribution 1 et retourne au premier réservoir 7 via la deuxième électrovanne V2.

Dans ce premier mode de carburation, le premier carburant vient spontanément remplir la première chambre 21 du caisson 19, poussant ainsi l'organe de séparation étanche 25 vers la deuxième chambre 23, et expulsant le deuxième carburant se trouvant initialement dans cette deuxième chambre (voir ci-après) vers la cartouche à charbon actif 27. Cette cartouche stocke alors le deuxième carburant issu de cette purge de la deuxième chambre.

Dans un deuxième mode de carburation où le moteur 3 est alimenté avec le deuxième carburant, les électrovannes V1, V2, V3 sont respectivement en positions ac, ac et cd.

Dans ces conditions, le deuxième carburant est prélevé par la pompe de surpression 17 dans le deuxième réservoir 15, puis envoyé via la première électrovanne V1 jusque dans la rampe de distribution 1.

Le reliquat de deuxième carburant non consommé par le moteur 3 ressort de la rampe de distribution et retourne au deuxième réservoir 15 via la deuxième électrovanne V2.

Pendant ce deuxième mode de carburation, la deuxième chambre 23 du caisson 19 est isolée du deuxième circuit d'alimentation.

Lors d'une phase de transition du premier mode de carburation vers le deuxième mode de carburation, la pompe de surpression 17 est mise en route, la pompe basse pression 9 continuant à fonctionner, puis l'électrovanne V1 est placée en position ac.

Le premier carburant contenu dans la rampe de distribution 1 est porté à la pression du deuxième carburant.

Les injecteurs sont alimentés avec du premier carburant au début de la phase de transition, puis avec un mélange des deux carburants dont la teneur en deuxième carburant augmente progressivement pour atteindre 100% à la fin de la phase de transition.

Au début de la phase de transition, l'électrovanne V2 est placée en position ab, de manière à faire recirculer le premier carburant.

Pendant la phase de transition, cette électrovanne est placée en position ad, de manière à envoyer le mélange des deux carburants vers la cartouche à charbon actif 27 afin d'y être stocké avant d'être recyclé dans le moteur 3.

A la fin de la phase de transition, l'électrovanne V2 est placée en position ac, de manière à faire recirculer le deuxième carburant, et la pompe basse pression 9 est stoppée.

Lors d'une phase de transition du deuxième mode de carburation vers le premier mode de carburation, la pompe basse pression 9 est mise en route, la pompe de surpression 17 continuant à fonctionner, puis l'électrovanne V3 est placée en position ad.

Ainsi, le deuxième carburant exerce sa pression sur l'organe de séparation 25 du caisson 19, ce qui a pour effet de porter le premier carburant qui se trouve dans la première chambre 21 (voir ci-dessus) et dans la portion du premier circuit comprise entre le clapet anti-retour 11 (qui se bloque sous l'effet de la surpression) et l'électrovanne V1 à la pression du deuxième carburant.

Ensuite, l'électrovanne V1 est placée en position bc: le premier carburant contenu dans la première chambre 21 et dans la portion du premier circuit comprise entre le clapet 11 et l'électrovanne V1 est chassé vers la rampe de distribution 1 sous l'effet du deuxième carburant qui remplit la deuxième chambre 23 en comprimant l'organe de séparation 25.

Ainsi, le premier carburant arrive dans la rampe de distribution 1 à la pression du deuxième carburant, ce qui permet d'éviter une chute de pression risquant de conduire à une vaporisation du deuxième carburant.

Lorsque tout le premier carburant situé dans la première chambre 21 a été chassé, la pression du mélange des deux carburants dans la rampe de distribution baisse progressivement pour s'établir à la pression d'alimentation normale du premier carburant. A ce moment là, le clapet anti-retour 11 redevient passant.

Les injecteurs sont alimentés avec du deuxième carburant au début de la phase de transition, puis avec un mélange des deux carburants dont la teneur en premier carburant augmente progressivement pour atteindre 100% à la fin de la phase de transition.

Au début de la phase de transition, l'électrovanne V2 est placée en position ac, de manière à faire recirculer le deuxième carburant.

Pendant la phase de transition, cette électrovanne est placée en position ad, de manière à envoyer le mélange des deux carburants vers la cartouche à charbon actif 27 afin d'y être stocké avant d'être recyclé dans le moteur 3.

A la fin de la phase de transition, l'électrovanne V2 est placée en position ab, de manière à faire recirculer le premier carburant; la pompe de surpression 17 est stoppée, et l'électrovanne V3 est placée en position db.

De manière avantageuse, l'ensemble des opérations décrites ci-dessus pourront être gérées par un calculateur électronique dûment programmé, selon des techniques connues de l'homme du métier.

Comme on peut le comprendre à présent, le procédé et le dispositif selon l'invention permettent de simplifier considérablement l'architecture des systèmes d'alimentation en carburant des moteurs à injection à carburation mixte.

Contrairement aux systèmes de la technique antérieure, on peut n'utiliser qu'une seule rampe de distribution et qu'une seule série d'injecteurs, sans qu'il y ait de risque de vaporisation du carburant alimenté sous haute pression lors d'une transition d'un mode de carburation à un autre.

En outre, aucun apport d'énergie supplémentaire n'est nécessaire pour effectuer une transition du deuxième mode de carburation vers le premier: on ne fait qu'utiliser la pression du deuxième carburant pour élever celle du premier carburant. On obtient de la sorte un bilan énergétique très satisfaisant.

Bien entendu, l'invention n'est pas limitée au mode de réalisation décrit et représenté, fourni seulement à titre d'exemple illustratif et non limitatif.

C'est ainsi par exemple que l'organe de séparation 25 du caisson 19 pourrait consister en un piston coulissant entre les deux chambres 21 et 23.

## Revendications

1. Procédé de gestion de l'alimentation en carburant d'un moteur à injection (3) à carburation mixte pouvant être alimenté sélectivement, selon un premier mode de carburation, avec un premier carburant tel que de l'essence dans une plage de pressions basses ou, selon un deuxième mode de carburation, avec un deuxième carburant tel que du G.P.L. dans une plage de pressions hautes, ledit deuxième carburant étant susceptible de se vaporiser dans ladite plage de pressions basses, caractérisé en ce qu'on utilise une même rampe de distribution (1) pour alimenter ledit moteur avec l'un ou l'autre de ces deux carburants, et en ce que, lors d'une phase de transition dudit deuxième mode de carburation vers ledit premier mode de carburation, on alimente ladite rampe (1) avec du premier carburant sous une pression située dans ladite plage de pressions hautes, de manière que la pression du deuxième carburant qui se trouve mélangé au premier carburant dans ladite rampe (1) reste située dans ladite plage de pressions hautes, évitant ainsi la vaporisation de ce deuxième carburant.

2. Procédé selon la revendication 1, caractérisé en ce que, pendant le fonctionnement dudit moteur (3) selon ledit premier mode de carburation, on remplit une chambre à volume variable (21) avec du premier carburant, et en ce que, lors de ladite phase de transition, on met en communication de fluide ladite chambre (21) avec ladite rampe de distribution (1), et on comprime cette chambre (21) sous une pression située dans ladite plage de pressions hautes, afin d'alimenter ladite rampe (1) avec du premier carburant sous une pression située dans cette plage.

3. Procédé selon la revendication 2, caractérisé en ce qu'on utilise la pression dudit deuxième carburant pour comprimer ladite chambre (21).

4. Procédé selon la revendication 3, caractérisé en ce qu'on stocke ledit deuxième carburant ayant servi à comprimer ladite chambre (21) après ladite phase de transition.

5. Procédé selon l'une quelconque des revendications précédentes, caractérisé en ce qu'on stocke le mélange des deux carburants qui n'a pas été consommé par ledit moteur (3) pendant ladite phase de transition.

6. Dispositif pour la mise en oeuvre d'un procédé conforme à l'une quelconque des revendications précédentes, comprenant un premier circuit pour alimenter ledit moteur (3) à injection avec ledit premier carburant dans ladite plage de pressions basses, un deuxième circuit pour alimenter ledit moteur (3) avec ledit deuxième carburant dans ladite plage de pressions hautes, caractérisé en ce qu'il comprend des premiers moyens de vanne (V1) pour mettre sélectivement en communication de fluide lesdits premier et deuxième circuits avec ladite rampe de distribution (1), et en ce qu'il comprend des moyens (19) pour alimenter ladite rampe (1) avec ledit premier carburant sous une pression située dans ladite plage de pressions hautes lors de ladite phase de transition.

7. Dispositif selon la revendication 6, caractérisé en ce que ledit premier circuit comprend un réservoir de premier carburant (7) et, interposés entre celui-ci et ladite rampe de distribution (1), une pompe basse pression (9) et un clapet anti-retour (11), en ce que ledit deuxième circuit comprend un réservoir de deuxième carburant (15) et, interposée entre celui-ci et ladite rampe de distribution (1), une pompe de surpression (17), en ce que lesdits premiers moyens de vanne (V1) sont interposés entre ledit clapet anti-retour (11), ladite pompe de surpression (17) et ladite rampe de distribution (1), en ce que lesdits moyens d'alimentation de ladite rampe avec du premier carburant sous une pression située dans ladite plage de pressions hautes consistent en un caisson d'égalisation de pression (19) comprenant des première (21) et deuxième (23) chambres séparées par un organe de séparation étanche et mobile (25), ladite première chambre (21) étant en communication de fluide permanente avec la portion dudit premier circuit qui est comprise entre ledit clapet anti-retour (11) et lesdits premiers moyens de vanne (V1), et en ce qu'il comprend des deuxièmes moyens de vanne (V3) permettant sélectivement d'isoler cette deuxième chambre (23), de la purger ou de la mettre en communication de fluide avec la portion dudit deuxième circuit qui est comprise entre ladite pompe de surpression (17) et lesdits premiers moyens de vanne (V1).

8. Dispositif selon la revendication 7, caractérisé en ce que ledit organe de séparation étanche et mobile (25) est une membrane souple.

9. Dispositif selon la revendication 7, caractérisé en ce que ledit organe de séparation étanche et mobile (25) est un piston.

10. Dispositif selon l'une quelconque des revendications 7 à 9, caractérisé en ce qu'il comprend des troisièmes moyens de vanne (V2) disposés à la sortie de ladite rampe de distribution (1), permettant sélectivement de faire recirculer ledit premier carburant dans ledit premier circuit ou ledit deuxième carburant dans ledit deuxième circuit, ou de stocker un mélange de ces deux carburants.

11. Dispositif selon l'une quelconque des revendications 7 à 10, caractérisé en ce qu'il comprend une cartouche à charbon actif (27) pour stocker temporairement le carburant provenant de la purge de ladite deuxième chambre ou le mélange de carburants provenant de ladite rampe de distribution, avant de l'envoyer vers ledit moteur.
